# EUROPEAN PATENT APPLICATION

(11) **EP 4 818 841 A1**
(43) Date of publication of application: **07.10.2026**
(21) Application number: 25168027.8
(22) Date of filing: 02.04.2025
(51) Int. Cl.: G05D 1/646, G05D 105/22, G05D 1/661, G05D 107/80, G05D 109/30, B63H 25/00

(54) **ARBITRARY PIVOT POINT FOR VEHICLE ROTATION AND CONTROL**

(71) Applicant: Volvo Penta Corporation, 405 08 Göteborg (SE)
(72) Inventor: Paulsson, Simon, 414 79 Göteborg (SE); Oscarsson, Christian, 444 47 Stenungsund (SE)
(74) Representative: Valea AB

(57) **Abstract**

Systems, apparatuses, products, and methods for arbitrary pivot point definition and vehicle rotation and/or control about the pivot point. A computer system comprising circuitry may be configured to receive first data indicative of an axis of rotation of a first vehicle. The computer system may be configured to determine a reference point for a steering maneuver of the first vehicle based on the first data. The computer system may transmit, to a steering controller of the first vehicle, a control message indicative of the reference point for the steering maneuver about the axis of rotation of the first vehicle. The reference point may be identified at a location within or external to a footprint of the first vehicle and/or within the footprint of a second vehicle.

## Description

### TECHNICAL FIELD

The disclosure relates generally to control and navigation of vehicles, including marine vehicles. In particular aspects, the disclosure relates to defining and using an arbitrary pivot point for vehicle rotation and control. The disclosure can be applied to marine vehicles, aircraft, and heavy-duty vehicles, such as trucks, buses, and construction equipment, among other vehicle types. Although the disclosure may be described with respect to a particular vehicle, the disclosure is not restricted to any particular vehicle type.

### BACKGROUND

Maneuvering a vehicle through or within an obstacle-laden environment may be challenging or dangerous, even for experienced operators, and poor execution may result in collisions or other undesirable outcomes. Automation of such tasks is similarly challenging because of the high degree of difficulty. Vehicle controls may not be tailored to readily manage such situations and may unduly rely on operator skill.

### SUMMARY

According to a first aspect of the disclosure, a computer system comprising processing circuitry is provided. The processing circuitry may be configured to receive first data indicative of an axis of rotation of a first vehicle. The processing circuitry may be configured to determine a reference point for a steering maneuver of the first vehicle, such as based on the first data. The processing circuitry may be configured to transmit, such as to a steering controller of the first vehicle, a control message, such as a control message indicative of the reference point for the steering maneuver about the axis of rotation of the first vehicle. The first aspect of the disclosure may seek to provide a device or apparatus, such as an element of a vehicle, to assist a vehicle operator, for example when operating in tight quarters, which may involve, in the absence of the disclosed techniques, excessive operator inputs, which may lead to undesirable translations and/or rotations of a vehicle and/or may cause excessive noise and wear on the vehicle's propulsion system. A technical benefit may include or result in a reduced number of operator inputs and/or in simplified operation when maneuvering in, for example, tight quarters.

Optionally in some examples, including in at least one preferred example, the processing circuitry is configured to determine the reference point for the steering maneuver at a location external to a footprint of the first vehicle. A technical benefit may include allowing an operation, such as a steering maneuver, which may be automated to be conducted about a reference point that is particularly suited to reduce a number of inputs and without regard to operating with a fixed reference point based on the vehicle's footprint.

Optionally in some examples, including in at least one preferred example, the processing circuitry is configured to determine the reference point for the steering maneuver at a location within the footprint of a second vehicle. A technical benefit may include allowing for a steering maneuver of the first vehicle in close proximity to the second vehicle, such as in a situation involving parking, docking, or landing the first vehicle.

Optionally in some examples, including in at least one preferred example, the processing circuitry is configured to determine the reference point for the steering maneuver at a location within the footprint of the first vehicle. A technical benefit may include allowing the operating characteristics, such as handling response, of the vehicle to change and/or adapt according to operator preference and/or operating conditions.

Optionally in some examples, including in at least one preferred example, the processing circuitry is configured to determine the reference point on a forward section of the first vehicle. A technical benefit may include allowing the vehicle to turn with a tighter, for example, smaller, turning radius.

Optionally in some examples, including in at least one preferred example, the processing circuitry is configured to determine the reference point on an aft section of the first vehicle. A technical benefit may include allowing the forward section of the vehicle to pivot about the rear or aft section of the vehicle, which may allow the vehicle to steer similar to a vehicle with a front steering axle irrespective of the physical location or actual presence of a steering axle.

Optionally in some examples, including in at least one preferred example, the processing circuitry is configured to receive the first data from at least one of a user interface, a sensor, a communications network, or any combination thereof. A technical benefit may include allowing the vehicle to be controlled, such as being controlled in part, by an input from one or several different sources, which may depend, for example, on operator preference, ability, or use case.

Optionally in some examples, including in at least one preferred example, the processing circuitry is configured to receive the first data from a user interface, receive, from a sensor of the first vehicle, second data indicative of an object in the vicinity of the first vehicle, and determine the reference point for the steering maneuver of the first vehicle based on the first data and the second data. A technical benefit may include allowing the vehicle to be controlled, such as being controlled in part, manually and/or automatically with respect to objects in the actual or potential path of the vehicle and/or in a tight-quarters situation involving object avoidance.

Optionally in some examples, including in at least one preferred example, the axis of rotation is orthogonal to a plane of the reference point, and the plane of the reference point is parallel to a medium upon which the first vehicle is situated for travel. A technical benefit may include allowing the vehicle to be controlled based on its current orientation of travel, such that the vehicle may pivot or otherwise be controlled about a point that is defined relative to the specific operating condition of the vehicle.

Optionally in some examples, including in at least one preferred example, the axis of rotation is relative to the first vehicle. A technical benefit may include allowing the vehicle to be controlled based on its current orientation of travel, such that the vehicle may pivot or rotate about an that is defined relative to the specific operating condition of the vehicle.

Optionally in some examples, including in at least one preferred example, the reference point comprises a fixed point on an area of land or structure abutting the area of land. A technical benefit may include allowing the vehicle to operate, such as pivot, when a preferred or beneficial location of a pivot point is, for example, on a fixed location or location that does not move relative to the vehicle.

Optionally in some examples, including in at least one preferred example, the computer system comprises and/or is coupled with a steering controller, which may be configured to receive the control message from the processing circuitry, receive an input from the user interface to initiate the steering maneuver, and/or control the vehicle in the steering maneuver about the axis of rotation. A technical benefit may include allowing a steering controller, such as circuitry and/or logic configured to manage steering of a vehicle, to operate the vehicle based on a defined reference point and/or axis of rotation.

Optionally in some examples, including in at least one preferred example, the first vehicle and/or the second vehicle comprises at least one of a vessel, an automobile, or an aerial vehicle. A technical benefit may include controlling one or more vehicles of various types with reference to one or more other vehicles of various types.

Optionally in some examples, including in at least one preferred example, the medium upon which the vehicle is situated for travel comprises at least one of water, a paved surface, air, or space, or any combination thereof. A technical benefit may include controlling one or more vehicles based on or with reference to an operating condition or use case.

According to a second aspect of the disclosure, a computer-implemented invention is provided. One or more features or steps of the method may be performed by, for example, processing circuitry of a computer system. The method may include receiving first data indicative of an axis of rotation of a first vehicle. The method may include determining a reference point for a steering maneuver of the first vehicle based on the first data. The method may include transmitting, such as to a steering controller, a control message, such as a control message indicative of the reference point for the steering maneuver of the first vehicle. The second aspect of the disclosure may seek to assist a vehicle operator, for example when operating in tight quarters, which may involve, in the absence of the disclosed techniques, excessive operator inputs, which may lead to undesirable translations and/or rotations of a vehicle and/or may cause excessive noise and wear on the vehicle's propulsion system. A technical benefit may include or result in a reduced number of operator inputs and/or in simplified operation when maneuvering in, for example, tight quarters.

Optionally in some examples, including in at least one preferred example, the method may comprise determining the reference point for the steering maneuver at a location external to a footprint of the first vehicle. A technical benefit may include allowing an operation, such as a steering maneuver, which may be automated to be conducted about a reference point that is particularly suited to reduce a number of inputs and without regard to operating with a fixed reference point based on the vehicle's footprint.

Optionally in some examples, including in at least one preferred example, the method may comprise determining the reference point for the steering maneuver at a location within the footprint of a second vehicle. A technical benefit may include allowing for a steering maneuver of the first vehicle in close proximity to the second vehicle, such as in a situation involving parking, docking, or landing the first vehicle.

Optionally in some examples, including in at least one preferred example, the method may comprise determining the reference point for the steering maneuver at a location within the footprint of the first vehicle. A technical benefit may include allowing the operating characteristics, such as handling response, of the vehicle to change and/or adapt according to operator preference and/or operating conditions.

Optionally in some examples, including in at least one preferred example, the method may comprise determining the reference point on a forward section of the vehicle. A technical benefit may include allowing the vehicle to turn with a tighter, for example, smaller, turning radius.

Optionally in some examples, including in at least one preferred example, the method may comprise determining the reference point on an aft section of the vehicle. A technical benefit may include allowing the forward section of the vehicle to pivot about the rear or aft section of the vehicle, which may allow the vehicle to steer similar to a vehicle with a front steering axle irrespective of the physical location or actual presence of a steering axle.

Optionally in some examples, including in at least one preferred example, the method may comprise receiving second data indicative of an object in the vicinity of the first vehicle and determining the reference point for the steering maneuver of the first vehicle based on the first data and the second data. A technical benefit may include allowing the vehicle to be controlled, such as being controlled in part, manually and/or automatically with respect to objects in the actual or potential path of the vehicle and/or in a tight-quarters situation involving object avoidance.

Optionally in some examples, including in at least one preferred example, of the method, the first vehicle and/or the second vehicle comprises at least one of a vessel, an automobile, or an aerial vehicle. A technical benefit may include controlling one or more vehicles of various types with reference to one or more other vehicles of various types.

Optionally in some examples, including in at least one preferred example, of the method, the axis of rotation is orthogonal to a plane of the reference point, and the plane of the reference point is parallel to a medium upon which the first vehicle is situated for travel. A technical benefit may include allowing the vehicle to be controlled based on its current orientation of travel, such that the vehicle may pivot or otherwise be controlled about a point that is defined relative to the specific operating condition of the vehicle.

Optionally in some examples, including in at least one preferred example, of the method the medium upon which the vehicle is situated for travel comprises at least one of water, a paved surface, air, or space, or any combination thereof. A technical benefit may include controlling one or more vehicles based on or with reference to an operating condition or use case.

According to a third aspect of the disclosure, a vehicle comprising a computer system, which in turn comprises processing circuitry, is provided. The vehicle, such as with the computer system, may include or execute one or more examples described with reference to the first and/or second aspects of the disclosure. A technical benefit may result in a reduced number of operator inputs and/or in simplified operation when maneuvering in, for example, tight quarters.

Optionally in some examples, including in at least one preferred example, the vehicle comprises the user interface coupled with the processing circuitry or the steering controller, or both. A technical benefit may include allowing for user or other inputs to the processing circuitry to affect or control steering, such as via a steering controller.

Optionally in some examples, including in at least one preferred example, of the vehicle, the user interface comprises at least one of a steering wheel, one or more control levers, or a joystick, or any combination thereof. A technical benefit may include accepting various inputs depending on use case and/or operator preference or ability.

According to a fourth aspect of the disclosure, a computer program product comprising code for performing, when executed by, for example, processing circuitry, one or more examples described with reference to the first and/or second aspects of the disclosure. A technical benefit may include a reduced number of operator inputs and/or in simplified operation when maneuvering in, for example, tight quarters.

According to a fifth aspect of the disclosure, a computer-readable storage medium comprising instructions which, when executed by processing circuitry, cause the processing circuitry and/or a system of which the processing circuitry is a part, to perform one or more examples described with reference to the first and/or second aspects of the disclosure. A technical benefit may result in a reduced number of operator inputs and/or in simplified operation when maneuvering in, for example, tight quarters.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of vehicle configured to operate with an arbitrary pivot point according to one or more examples.
**FIGS. 2A-2C** are plan views of operations of vehicles configured to operate with an arbitrary pivot point according to various examples.
**FIG. 3** is another view of **FIG. 1****,** according to an example.
**FIG. 4** is a flow chart of an exemplary method to operate a vehicle, or to control operations of a vehicle, with an arbitrary pivot point according to one or more examples.
**FIG. 5** is a schematic diagram of an exemplary computer system for implementing one or more examples disclosed herein.

### DETAILED DESCRIPTION

The detailed description set forth below provides information and examples of the disclosed technology with sufficient detail to enable those skilled in the art to practice the disclosure.

Some vehicle control systems may support certain control or operator assistance features. Vessels (e.g., power boats) may, for example, be controlled with a joystick or other user input device to allow for precise and subtle maneuvering. Such vessels may include assisted docking featured to automate or supplement certain operations. It is possible, in some cases, to rotate or translate the vessel on the water. This may include rotation about a centerpoint of the vessel's footprint, which may simplify some maneuvers and may ease handling. Similar operations may be executed in certain aircraft, especially rotorcraft, and in some automobiles, including those with multiple turning axles or individually steering wheels. Despite the possibility of relatively precise controls and automation of some operations, maneuvering in tight quarters may involve a large number of operator inputs and/or may be composed of numerous translations and rotations.

The present disclosure thus provides for a definition of an arbitrary pivot point for a vehicle about which point the vehicle can rotate. This may allow maneuvers to be executed with fewer operator inputs and/or adjustments. An arbitrary pivot point, as used herein, refers to a pivot point that may be defined or located at any location relative to the vehicle, which may be in contrast to a pivot point defined (or de facto occurring) at a fixed point relative to the vehicle. Defining and operating about an arbitrary pivot point may, in some examples, be beneficial for watercraft, such as power boats, because of the degrees of freedom such vessels have for rotating and translating over water. The present disclosure, however, is applicable to other vehicles that may be operated in some similar fashion, such as certain aircraft, spacecraft, automobiles, and equipment.

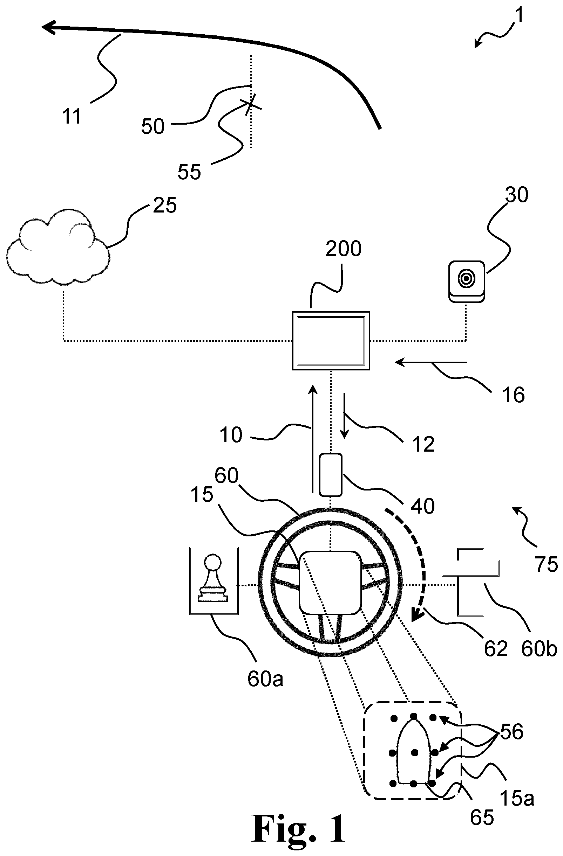

**FIG. 1** is an exemplary system diagram 1 of vehicle configured to operate with an arbitrary pivot point according to one or more examples. System diagram 1 depicts a first vehicle 75 which may perform a steering maneuver 11 about an axis of rotation 50 that is defined or oriented with respect to an arbitrary pivot point, such as reference point 55. The axis of rotation 50 may be orthogonal to a plane of the reference point 55 (e.g., a geometric plane the reference point 55 is situated in), and the plane of the reference point 55 may be parallel to a medium upon which the first vehicle 75 is situated for travel. The axis of rotation 50 may thus be understood relative to the first vehicle 75. In one or more examples, the first vehicle 75 comprises at least one of a vessel, an automobile, or an aerial vehicle.

A vessel may be seen as a watercraft designed for transportation on water, which may range from small boats to large ships. Vessels may include sailboats, motorboats, cruise ships, cargo ships, submarines, and other waterborne craft designed to carry people or goods.

An automobile may be seen as a wheeled motor vehicle designed for land transportation, which may be powered by an internal combustion engine, electric motor, or hybrid system. Automobiles may include cars, trucks, vans, and SUVs that may be used to transport people and goods over land (e.g., on paved or unpaved surfaces).

An aerial vehicle may be seen as an aircraft, which may be a vehicle designed to travel through the air, supported by the dynamic reaction of air against its wings or by buoyancy. Aircraft may include airplanes, helicopters, gliders, hot air balloons, and other flying machines capable of atmospheric flight.

An aerial vehicle may be seen as a spacecraft, which may be a vehicle designed for travel or operation in outer space beyond Earth's atmosphere. Spacecraft may include satellites, space shuttles, space stations, rockets, probes, and other vehicles engineered to function outside Earth's atmosphere, such as for purposes such as exploration, research, or transportation.

The first vehicle may thus, depending on the vehicle type and/or use, operate on or be situated for travel upon a variety of media, such as water, a dirt surface, a clay surface, a paved surface, air, space or the like. For example, first vehicle 75 may be a vessel, such as a power boat, operating on water, such as a body of water, which may include obstacles (such as within a marina) that involve tight quarters for performing maneuvers. The disclosure herein may also apply to an automobile, such as a car, an airplane, a helicopter, a rocket, a satellite, or the like. In the case of a vehicle 75 traveling upon or within media such as air or space, which may not have a clearly defined surface, the plane upon which vehicle 75 may be situated for travel for such media may be seen as a plane that is tangential to a surface of the vehicle 75.

As used herein, water may be seen as a body of water, such as a river, pond, lake, bay, harbor, sea, ocean, including frozen or partially frozen instances of the same. A paved surface may be seen as a road, highway, parking lot (e.g., a car park), slab, floor, or the like, including such surfaces covered wholly or partially with rock, stone, gravel, concrete, asphalt, brick, pavers, or the like. In some examples, a dirt surface may be seen as a gravel road. Air may be seen as any composition of gas or air in, for example, the area above the Earth's ground, including the atmosphere. Space may be seen as the space or area outside or beyond the Earth's atmosphere.

An arbitrary pivot point may be defined using one or more inputs or bases. For example, first vehicle 75 may include computer system 200 configured to receive first data 10. A user may indicate an axis of rotation for vehicle 75. This may be accomplished, for example, using user interface 15, such that an operator may select a location about which the operator wants the vehicle to rotate, which may be communicated to computer system 200 via, for example first data 10.

First data 10 may include information from user interface 15. First data 10 (and, in some examples, second data 16, and/or control message 12) may be seen as electrical or digital representations of user inputs or interactions. These may include packetized communications, encoded instructions, state information, parameters, metadata, or the like.

In one or more examples, user interface 15 includes an interactive (e.g., touch screen) display upon which an operator of the first vehicle 75 may define a maneuver or desired location (e.g., a docking or parking position). First data 10 may thus include information, such as a command, from the operator for system 200. A computer system 200 may thus be configured to determine a reference point 55 for such axis of rotation 50. First data 10 may be indicative of an axis of rotation 55 of the first vehicle 75 because first data 10 may indicate to computer system 200 information about a desired steering maneuver 11, and computer system 200 may determine the reference point 50 for the steering maneuver 11 accordingly.

For example, user interface 15 may include a screen with graphic or picture of vehicle 75, such as boat, and may include a representation of surrounding objects. An operator may touch or press a location on the screen where they want to set the reference point 55.

Additionally or alternatively, user interface 15 may include a screen with a graphic or picture of vehicle 75, such as a boat, which may include and surrounding objects. An operator may be able to indicate (e.g., draw or trace) via the user interface 15 the graphic of the vehicle being moved to a desired position on the screen, which may be communicated via first data 10. Computer system 200 may respond with suggestion of pivot point (such as reference point 55) or series of movements and pivot points to accomplish the final position, such as in a least number of movements, and such suggestions may be displayed via user interface 15. Such an example may include consideration of boundaries, such as surrounding objects or other vehicles.

User interface 15 may be configured to allow an operator to move or manipulate a slider or graphic of a slider, which may define the steering characteristics front (e.g., fore) and rear (e.g., aft) of a vehicle 75.

Additionally or alternatively, user interface 15 may be configured to allow an operator to define one or more reference points at different locations relative to a vehicle. Fig. 1 depicts a schematic version 15a of user interface 15 that may represent a touchscreen with an icon 65 of vehicle shown. In some examples, one of nine pivot points 56 may be defined by a user touching the user interface 15 at one of the pivot points 56. Such pivot points 56 may be preconfigured pivot points 56 for the vehicle 75. For instance, in the case of a boat, user interface 15 may be configured to accept first data 10 that includes operator inputs that indicate a pivot point 56 defined relative to various positions on the icon 65, which computer system 200 may use to determine a reference point 55 for an axis of rotation 50.

In one or more examples, computer system 200 may account for an environment surrounding vehicle 75, the current position of the vehicle 75, and the final desired position of the vehicle 75, which may be communicated in first data 10 and/or second data 16. Computer system 200 may then identify and calculate a series of maneuvers that may, for example, depend on pivot points to stay inside boundaries and reduce (e.g., minimize) the amount of actuation of engines to accomplish the task of moving the boat to the desired position.

Accordingly, in one or more examples, a particular maneuver or desired location for vehicle 75 may be communicated to computer system 200, and computer system 200 may be configured to define, which may include identifying, reference point 55 based on information available to it, such as program instructions and/or sensor inputs.

In one or more examples, reference point 50 may be determined from one or more inputs, which may be in addition to the first data 10. For example, computer system 200 may be configured to receive second data 16 from a sensor 30. Sensor 30 may represent one or several sensors or inputs, which may be the same or different types of sensors. For example, sensor 30 may be or may include one of the following: a camera, radar, lidar, sonar, and/or ultrasound.

In some examples, computer system 200 may be configured to receive data or other information from a network 25 or other remote device, such as via wireless communication. Network 25 may represent information or data, of a combination of such information or data, which may be received from remote computers (such as cloud servers), one or more autonomous vehicles (e.g., unmanned aerial, terrestrial, or aquatic vehicles, which may be referred to as a drone or drones), and/or from a remote controller, which may be a person or an automated system.

Computer system 200 may, in one or more examples, be configured to receive the first data 10 from at least one of a user interface 15, a sensor 30, a communications network 25, or any combination thereof. In one or more examples, user interface 15 includes a steering wheel 60, one or more control levers 60b (such as a throttle or other control), or a joystick 60a, or any combination thereof.

By way of example, vehicle 75 may be controlled by a drone system in which an unmanned aerial vehicle is observing and sending information (e.g., control and data) to computer system 200 via network 25. Computer system 200 may be configured to use such control information, for example in combination with first data 10 and/or second data 16, to define a reference point 55 for the steering maneuver 11 about axis of rotation 50.

Computer system 200 may be configured to transmit, for example to a steering controller 40 of the first vehicle 75, a control message 12, which may be indicative of the reference point 55 for the steering maneuver 11 about the axis of rotation 50 of the first vehicle 75.

In one or more examples, the vehicle 75 comprises a steering controller 40 configured to receive the control message 12 from the processing circuitry of the computer system 200 and receive an input 62 from the user interface 15 (e.g., an input made via steering wheel 60) to initiate the steering maneuverer 11. The steering controller 40, for example in combination with computer system 200, may control the vehicle in the steering maneuverer 11 about the axis of rotation 50.

The steering controller 40 may be seen as a processing unit (or may comprise processor circuitry) configured to receive various inputs from navigation systems (e.g., network 25 via computer system 200), sensors 30, and/or operator commands (e.g., via user interface 15). Steering controller 40 may comprise hardware, software, and/or firmware configured to translate inputs into, for example, actuator commands. Such actuator commands may be output to, for example drive motors, which may be electric, electronic, and/or hydraulic motors that convert the controller's 40 commands into physical movement to control or operate propulsion and/or steering equipment. Such drive motors may be connected to one or more rudders, azimuth thrusters, or other steering mechanisms. Steering controller 40 may thus control or operate a propulsion system or systems of vehicle 75, which may include one or more engines, motors, turbines, rotors, and/or propellers that provide forward and/or reverse thrust. Vehicle 75 may comprise propulsion equipment (e.g., bow and/or stern thrusters) for lateral movement. Steering controller 40 may translate various inputs to control some or all aspects of such a multi-faceted propulsion system.

Accordingly, computer system 200 may in combination with steering controller 40 and/or other aspects of vehicle 75, in some examples, implement a control architecture in which high-level planning, such as inputs from a local or remote operator, drone system, network, or the like, feeds into mid-level trajectory generation, such as determination of a reference point and/or axis of rotation, which then drives motor controllers for propulsion and steering systems.

Examples of types of maneuvers that may be performed using a defined arbitrary pivot point, and examples of where a pivot point (and thus an axis of rotation) may be defined, are described in the following.

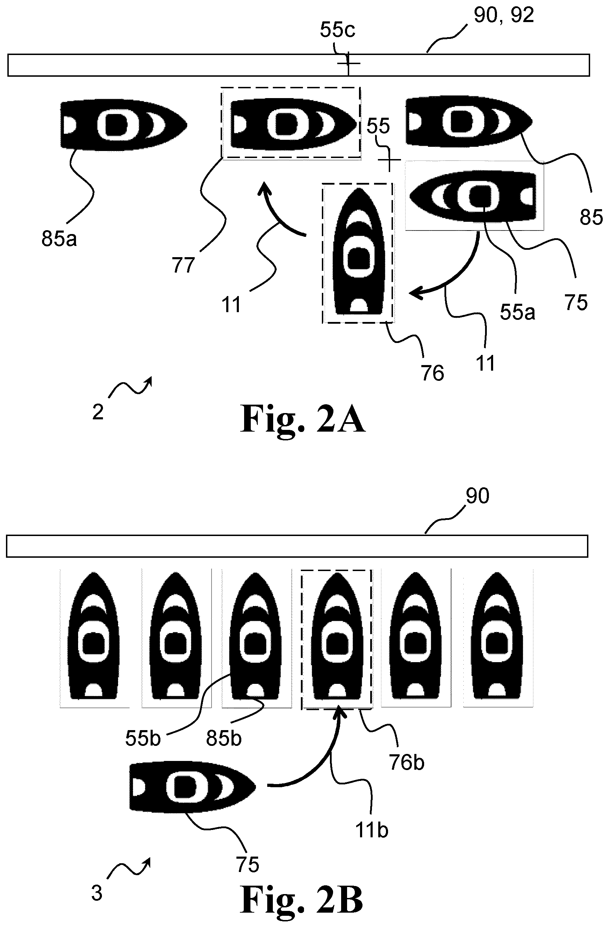

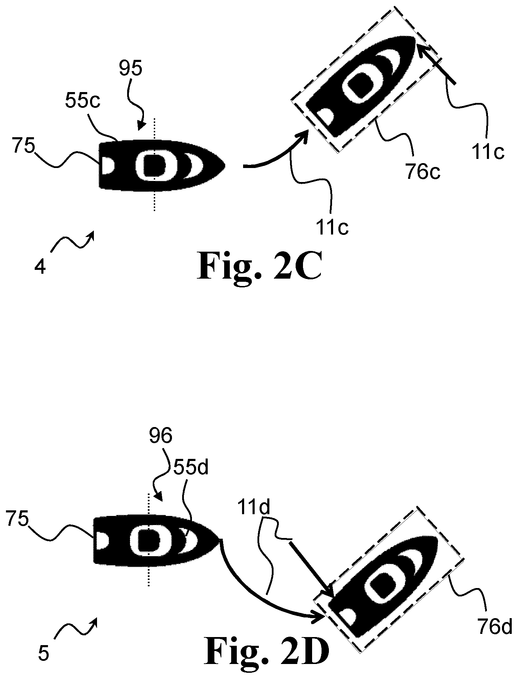

**FIGS. 2A-2D** are plan views 2, 3, 4, and 5 of example operations of vehicles configured to operate with an arbitrary pivot point according to various examples. Such views 2-5 depict a first vehicle 75, which may be an example of the vehicle 75 described with reference to FIG. 1. The first vehicle 75 may, for example, include a computer system as described herein, which may be configured to determine a reference point 55 for the steering maneuver 11. In one or more examples, reference point 55 may be an arbitrary pivot point about which the first vehicle 75 may pivot, such as about an axis of rotation orthogonal to a plane that includes reference point 55, such that the first vehicle pivots to position 77. The reference point 55 may be determined based on an axis of rotation that allows the first vehicle 75 to pivot or rotate from a position adjacent to a second vehicle 85 and into position 77, which may be a docking position or a parking position, in various examples.

In one or more examples, steering maneuver 11 may include more than one step such that more than one reference point 55 and 55a may be determined to accomplish the maneuver. For example, the first vehicle 75 may be, for example via a computer system, configured to determine the reference point for the steering maneuver 11 at a location 55a within the footprint of the first vehicle 75. A footprint of a vehicle may be understood as the vehicle's planform area or projected area on the horizontal plane parallel to and below the vehicle. As depicted in FIGS. 2A-2D, a footprint of the first vehicle 75 may be understood as the shaded area of vehicle 75, including the cutouts or details depicted internal to such area. A footprint of a vehicle may thus be understood as the two-dimensional area enclosed by the vehicle's outermost extremities when projected onto a flat surface.

Refence point 55a may be determined based on data indicative of an axis of rotation that allows the first vehicle 75 to pivot or rotate into position 76. In some examples, the first vehicle 75 may perform a steering maneuver 11 that includes a first pivot or rotation about a first axis of rotation based on a first reference point, such as reference point 55a, and a second pivot or rotation about a second axis of rotation based on a second reference point, such as reference point 55, with a result that the first vehicle ends up at position 77 between a second vehicle 85 and a third vehicle 85a.

In one or more examples, an arbitrary pivot point may be defined, such as by computer system of vehicle 75, and such vehicle 75 may be configured to determine, a reference point 55b, 55c, 55d, 90, and/or 92 at a location external to a footprint of the first vehicle 75. The first vehicle 75 may thus preform a steering maneuver 11b about reference point 55b, which may be within a footprint of a second vehicle 85b, and such a maneuver may result in the first vehicle 75 ending in position 76b parallel to the second vehicle 85b. Accordingly, a computer system of the first vehicle 75 may be configured to determine the reference point 55b for the steering maneuverer 11b at a location within the footprint of a second vehicle 85b.

In one or more examples, the computer system of first vehicle 75 may be configured to determine a reference point that comprises a fixed point 55c on an area of land or structure abutting the area of land 92. In one or more examples, The computer system may be configured to receive the first data from a user interface of the first vehicle 75, receive, from a sensor of the first vehicle 75, second data indicative of an object in the vicinity 90 of the first vehicle, and determine the reference point for the steering maneuverer of the first vehicle 75 based on the first data and the second data.

In one or more examples, the computer system of first vehicle 75 may be configured to determine a reference point 55c on an aft section 95 of the first vehicle. An aft section 95 may be understood as a point in the rear half of a vehicle, such as on the rear, tail, or trailing half of the vehicle 75, where such a portion is defined as the in the back or rear of a middle or center line of the vehicle 75, and the front is understood as a leading portion in the predomination direction of travel. In the case of a vessel, the aft section 95 may be understood as being toward the stern. In the case of an automobile, the aft section 95 may be understood as being toward the rear axle. In the case of an airplane, the aft section 95 may be understood as being toward the tail. In such an example or examples, the vehicle 75 may handle in a manner similar to a typical car or other vehicle that employs front axle steering. In the case of a vessel employing such a technique, the vessel, which may be vehicle 75, may perform a steering maneuver 11c such that the vehicle 75 has a resulting position 76c in which the front section of the vehicle 75 swings in a wider arc relative to the aft section 95.

In one or more examples, a computer system of vehicle 75 may be configured to determine the reference point 55d on a forward section 96 of the first vehicle. A forward section 96 may be understood as a point in the front half of a vehicle, such as on the forward, nose, or leading half of the vehicle 75, where such a portion is defined as the in front of a middle or center line of the vehicle 75, and the front is understood as a leading portion in the predomination direction of travel. In the case of a vessel, the forward section 96 may be understood as being toward the bow. In the case of an automobile, the forward section 96 may be understood as being toward the front axle. In the case of an airplane, the forward section 96 may be understood as being toward the nose. In such an example or examples, the vehicle 75 may be capable of drifting, which may be seen as the vehicle 75 having an enlarged turning radius, relative to other types of turns, in which the rear or aft of the vehicle 75 traces a wider arc than in conventional turning. As depicted in FIG. 2D, vehicle 75 may, during a steering maneuver 11d, move to a position 76d in which the front section 96 (e.g., bow) as pivoted inward, relative to a turn, while the aft (e.g., stern) has slide toward the outside of the turn. In some examples, such a vehicle 75 may be capable of turning in a manner similar to a forklift or other vehicle employing rear axle steering in which the aft section pivots about the forward section.

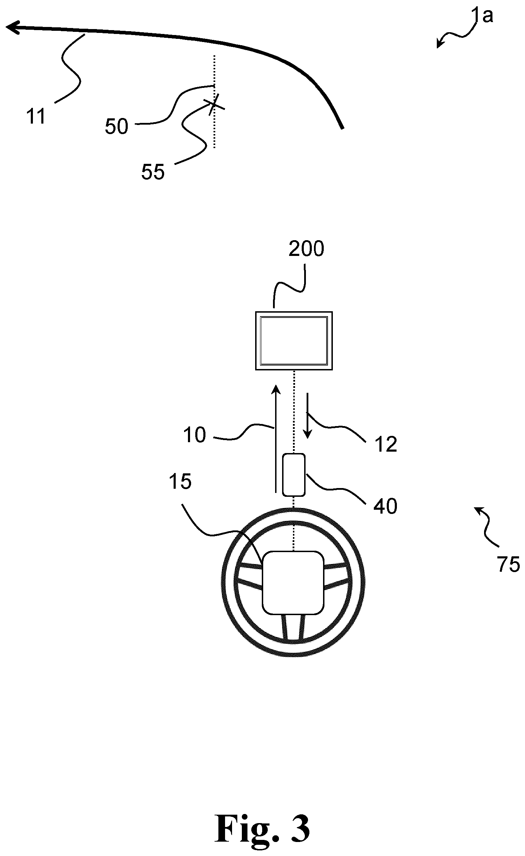

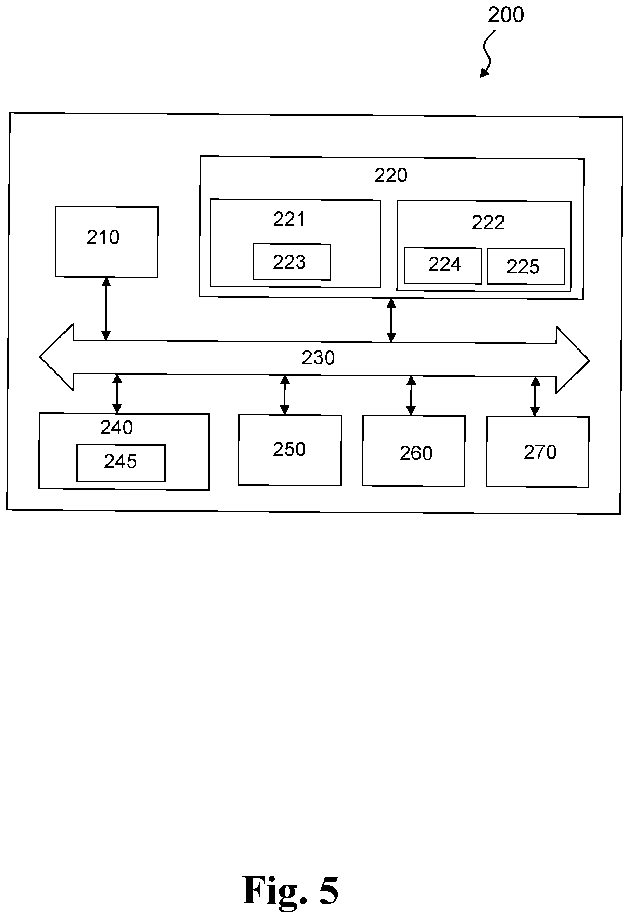

**FIG. 3** is another view 1a of FIG. 1, according to an example. View 1a depicts a vehicle 75 in which a computer system 200 comprises processing circuitry (such as described with reference to FIG. 5) configured to receive first data 10 indicative of an axis of rotation 50 of the first vehicle 75. The processing circuitry may determine a reference point 55 for a steering maneuver 11 of the first vehicle 75 based on the first data 10. The processing circuitry may transmit, such as to a steering controller 40 of the first vehicle 75, a control message 12 indicative of the reference point 55 for the steering maneuver about the axis of rotation 50 of the first vehicle 75.

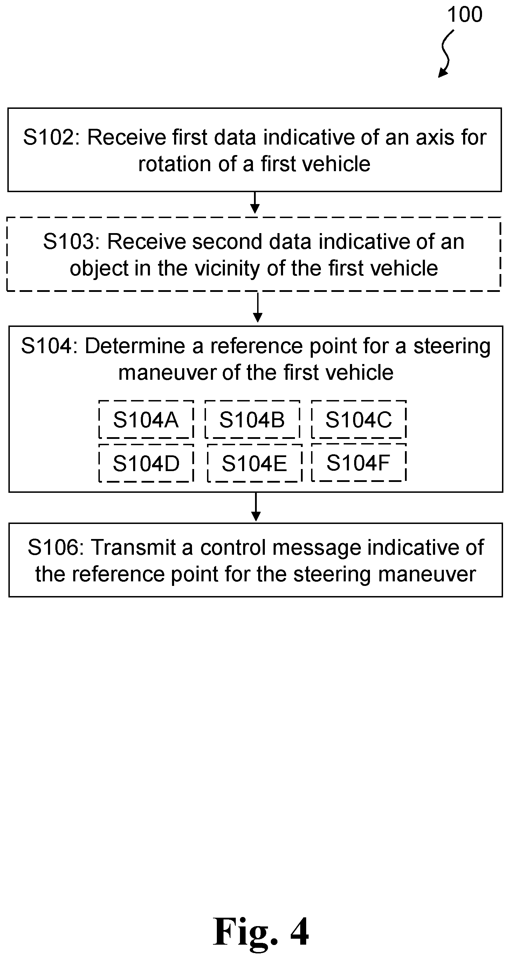

**FIG. 4** is a flow chart of an exemplary method 100 to operate a vehicle, or to control operations of a vehicle, with an arbitrary pivot point according to one or more examples. Method 100 may be performed, for example, by a computer system 200 (e.g., as described with reference to FIGS. 1, 3, and/or 5), a vehicle 75 (e.g., as described with reference to FIGS. 1 and/or 2A-2D), and/or various components of such a system or vehicle.

The method 100 comprises receiving S102, such as by processing circuitry of a computer system, first data indicative of an axis of rotation of a first vehicle. An action taken by processing circuitry may be understood as performing an action with, such as executing instructions with, processing circuitry as described elsewhere herein.

In one or more examples, the method 100 comprises receiving S103, such as by the processing circuitry, second data, such as second data indicative of an object in the vicinity of the first vehicle.

The method 100 comprises determining S104, such as by the processing circuitry, a reference point for a steering maneuver of the first vehicle, such as based on the first data.

In one or more examples, the method 100 comprises determining S104A, such as by the processing circuitry, the reference point for the steering maneuver at a location external to a footprint of the first vehicle.

In one or more examples, the method 100 comprises determining S104B, such as by the processing circuitry, the reference point for the steering maneuver at a location within the footprint of a second vehicle.

In one or more examples, the method 100 comprises determining S104C, such as by the processing circuitry, the reference point for the steering maneuver at a location within the footprint of the first vehicle.

In one or more examples, the method 100 comprises determining S104D, such as by the processing circuitry, the reference point on a forward section of the vehicle.

In one or more examples, the method 100 comprises determining S104E, such as by the processing circuitry, the reference point on an aft section of the vehicle.

In one or more examples, the method 100 comprises determining S104F, such as by the processing circuitry, the reference point for the steering maneuver of the first vehicle based on the first data and the second data, which, for example, may be indicative of an object in the vicinity of the first vehicle.

The method 100 comprises transmitting S106, such as by the processing circuitry to, for example, a steering controller, a control message, such as a control message indicative of the reference point for the steering maneuver of the first vehicle.

In one or more examples of the method 100, the first vehicle and/or the second vehicle may comprise a computer system configured to execute one or more aspects of the method 100. Either or both the first vehicle and/or the second vehicle may be a vessel, an automobile, or an aerial vehicle in various examples. The first vehicle and the second vehicle may be the same or different types of vehicles, and they may be the same or different from one another. Either or both the first vehicle and/or the second vehicle may comprise a computer system as described herein.

In one or more examples of the method 100, the axis of rotation is orthogonal to a plane of the reference point, and the plane of the reference point is parallel to a medium upon which the vehicle is situated for travel. The medium may comprise at least one of water, a paved surface, air, or space or any combination thereof.

**FIG. 5** is a schematic diagram of an exemplary computer system 200 for implementing one or more examples disclosed herein. The computer system 200 may be an example of the computer system 200 described with reference to FIGS. 1, 2A-2D, and/or 3. The computer system 200 is adapted to execute instructions from a computer-readable medium to perform these and/or any of the functions or processing described herein. The computer system 200 may be connected (e.g., networked) to other machines in a LAN (Local Area Network), LIN (Local Interconnect Network), automotive network communication protocol (e.g., FlexRay), an intranet, an extranet, or the Internet. Computer system 200 may employ cellular and/or WWAN (Wireless Wide Area Network) techniques in some examples. While only a single device is illustrated, the computer system 200 may include any collection of devices that individually or jointly execute a set (or multiple sets) of instructions to perform any one or more of the methodologies discussed herein. Such methodologies include, for example, method 100 described with reference to Fig. 4. Computer system 200 and/or its various components may thus be configured to perform method steps S102, S103, S104, S104A, S104B, S104C, S104D, S104E, S104F, and/or S106.

Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 200 may comprise at least one computing device or electronic device capable of including firmware, hardware, and/or executing software instructions to implement the functionality described herein. The computer system 200 may include processing circuitry 210 (e.g., processing circuitry including one or more processor devices or control units), a memory 220, and a system bus 230. The computer system 200 may include at least one computing device having the processing circuitry 210. The system bus 230 provides an interface for system components including, but not limited to, the memory 220 and the processing circuitry 210. The processing circuitry 210 may include any number of hardware components for conducting data or signal processing or for executing computer code stored in memory 220. The processing circuitry 210 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 220 may further include computer executable code that controls operation of the programmable device.

The system bus 230 may be any of several types of bus structures that may further interconnect to a memory bus (with or without a memory controller), a peripheral bus, and/or a local bus using any of a variety of bus architectures. The memory 220 may be one or more devices for storing data and/or computer code for completing or facilitating methods described herein. The memory 220 may include database components, object code components, script components, or other types of information structure for supporting the various activities herein. Any distributed or local memory device may be utilized with the systems and methods of this description. The memory 220 may be communicably connected to the processing circuitry 210 (e.g., via a circuit or any other wired, wireless, or network connection) and may include computer code for executing one or more processes described herein. The memory 220 may include non-volatile memory 221 (e.g., read-only memory (ROM), erasable programmable read-only memory (EPROM), electrically erasable programmable read-only memory (EEPROM), etc.), and volatile memory 222 (e.g., random-access memory (RAM)), or any other medium which can be used to carry or store desired program code in the form of machine-executable instructions or data structures and which can be accessed by a computer or other machine with processing circuitry 210. A basic input/output system (BIOS) 223 may be stored in the non-volatile memory 221 and can include the basic routines that help to transfer information between elements within the computer system 200.

The computer system 200 may further include or be coupled to a non-transitory computer-readable storage medium such as the storage device 240, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 240 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 240 and/or in the volatile memory 222, which may include an operating system 224 and/or one or more program modules 225. All or a portion of the examples disclosed herein may be implemented as a computer program 245 stored on a transitory or non-transitory computer-usable or computer-readable storage medium (e.g., single medium or multiple media), such as the storage device 240 which includes complex programming instructions (e.g., complex computer-readable program code) to cause the processing circuitry 210 to carry out actions described herein. Thus, the computer-readable program code of the computer program 245 can comprise software instructions for implementing the functionality of the examples described herein when executed by the processing circuitry 210. In some examples, the storage device 240 may be a computer program product (e.g., readable storage medium) storing the computer program 245 thereon, where at least a portion of a computer program 245 may be loadable (e.g., into a processor) for implementing the functionality of the examples described herein when executed by the processing circuitry 210. The processing circuitry 210 may serve as a controller or control system for the computer system 200 that is to implement the functionality described herein.

The computer system 200 may include an input device interface 250 configured to receive input and selections to be communicated to the computer system 200 when executing instructions, such as from a keyboard, mouse, touch-sensitive surface, etc. In one or more examples, a user interface, such as steering wheel 60, joystick 60a, and/or control lever(s) 60b as described with reference to FIG. 1 comprise input devices coupled with input device interface 250 (or such user interfaces may be input device 250, in some examples). Such input devices may be connected to the processing circuitry 210 through the input device interface 250 coupled to the system bus 230 but can be connected through other interfaces, such as a parallel port, an Institute of Electrical and Electronic Engineers (IEEE) 1394 serial port, a Universal Serial Bus (USB) port, an IR interface, and the like.

The computer system 200 may include an output device interface 260 configured to forward output, such as to a display, a video display unit (e.g., a liquid crystal display (LCD) or a cathode ray tube (CRT)). Such a display may be coupled with or may be an aspect of a user interface of vehicle 75 described with reference to FIG. 1. Additionally or alternatively, output device interface 260 may be configured to transmit outputs and/or commands to other devices, such as steering controller 40 described with reference to FIGS. 1 and 3.

The computer system 200 may include a communications interface 270 suitable for communicating with a network as appropriate or desired. In one or more examples, network 25 as described with reference to Fig. 1 is coupled to (or comprises) communications interface 270. Additionally or alternatively, communications interface 270 may be configured to receive input from a sensor or sensors, such as sensor 30 described with reference to FIG. 1.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Various example methods, devices, apparatuses, computer program products, non-transitory computer-readable storage media, and systems are set forth in the following.

Example 1: A computer system comprising processing circuitry configured to: receive first data indicative of an axis of rotation of a first vehicle; determine a reference point for a steering maneuver of the first vehicle based on the first data; and transmit, to a steering controller of the first vehicle, a control message indicative of the reference point for the steering maneuver about the axis of rotation of the first vehicle.

Example 2: The computer system of example 1, wherein the processing circuitry is further configured to: determine the reference point for the steering maneuver at a location external to a footprint of the first vehicle.

Example 3: The computer system of any of examples 1-2, wherein the processing circuitry is further configured to: determine the reference point for the steering maneuver at a location within the footprint of a second vehicle.

Example 4: The computer system of example 1, wherein the processing circuitry is further configured to: determine the reference point for the steering maneuver at a location within the footprint of the first vehicle.

Example 5: The computer system of example 4, wherein the processing circuitry is further configured to: determine the reference point on a forward section of the first vehicle.

Example 6: The computer system of example 4, wherein the processing circuitry is further configured to: determine the reference point on an aft section of the first vehicle.

Example 7: The computer system of any of examples 1-6, wherein the processing circuitry is further configured to: receive the first data from at least one of a user interface, a sensor, a communications network, or any combination thereof.

Example 8: The computer system of any of examples 1-6, wherein the processing circuitry is further configured to: receive the first data from a user interface; receive, from a sensor of the first vehicle, second data indicative of an object in the vicinity of the first vehicle; and determine the reference point for the steering maneuver of the first vehicle based on the first data and the second data.

Example 9: The computer system of any of examples 1-8, wherein the axis of rotation is orthogonal to a plane of the reference point, and the plane of the reference point is parallel to a medium upon which the first vehicle is situated for travel.

Example 10: The computer system of any of examples 1-9, wherein the axis of rotation is relative to the first vehicle.

Example 11: The computer system of example 10, wherein the reference point comprises a fixed point on an area of land or structure abutting the area of land.

Example 12: The computer system of any of examples 1-11, wherein the steering controller is configured to: receive the control message from the processing circuitry; receive an input from the user interface to initiate the steering maneuver; and control the vehicle in the steering maneuver about the axis of rotation.

Example 13: The computer system of any of examples 1-12, wherein the first vehicle and/or the second vehicle comprise at least one of a vessel, an automobile, or an aerial vehicle.

Example 14: The computer system of any of examples 8-12, wherein the medium upon which the first vehicle and/or the second vehicle are situated for travel comprises at least one of water, a paved surface, air, or space, or any combination thereof.

Example 15: A vehicle, such as the first vehicle and/or the second vehicle comprising the computer system of any of examples 1-14.

Example 16: The vehicle of example 15, further comprising: the user interface coupled with the processing circuitry or the steering controller, or both.

Example 17: The vehicle of example 16, wherein the user interface comprises at least one of a steering wheel, one or more control levers, or a joystick, or any combination thereof.

Example 18: A computer-implemented method, comprising: receiving, by processing circuitry of a computer system, first data indicative of an axis of rotation of a first vehicle; determining, by the processing circuitry, a reference point for a steering maneuver of the first vehicle based on the first data; and transmitting, by the processing circuitry to a steering controller, a control message indicative of the reference point for the steering maneuver of the first vehicle.

Example 19: The method of example 18, further comprising: determining, by the processing circuitry, the reference point for the steering maneuver at a location external to a footprint of the first vehicle.

Example 20: The method of any of examples 18-19, further comprising: determining, by the processing circuitry, the reference point for the steering maneuver at a location within the footprint of a second vehicle.

Example 21: The method of any of examples 18-20, further comprising: determining, by the processing circuitry, the reference point for the steering maneuver at a location within the footprint of the first vehicle.

Example 22: The method of example 21, further comprising: determining, by the processing circuitry, the reference point on a forward section of the vehicle.

Example 23: The method of example 22, further comprising: determining, by the processing circuitry, the reference point on an aft section of the vehicle.

Example 24: The method of any of examples 18-23, further comprising: receiving, by the processing circuitry, second data indicative of an object in the vicinity of the first vehicle; and determining, by the processing circuitry, the reference point for the steering maneuver of the first vehicle based on the first data and the second data.

Example 25: The method of any of examples 18-24, wherein the vehicle comprises at least one of a vessel, an automobile, or an aerial vehicle.

Example 26: The method of any of examples 18-23, wherein the axis of rotation is orthogonal to a plane of the reference point, and the plane of the reference point is parallel to a medium upon which the vehicle is situated for travel, the medium comprising at least one of water, a paved surface, air, or space or any combination thereof.

Example 27: A computer program product comprising program code for performing, when executed by the processing circuitry, the method of any of examples 18-26.

Example 28: A non-transitory computer-readable storage medium comprising instructions, which when executed by the processing circuitry, cause the processing circuitry to perform the method of any of examples 18-26.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (200) comprising processing circuitry (210) configured to:
- receive first data (10) indicative of an axis of rotation (50) of a first vehicle (75);
- determine a reference point (55) for a steering maneuver (11) of the first vehicle based on the first data; and
- transmit, to a steering controller (40) of the first vehicle, a control message (12) indicative of the reference point for the steering maneuver about the axis of rotation of the first vehicle.

2. The computer system of claim 1, wherein the processing circuitry is further configured to:
- determine the reference point for the steering maneuver at a location external (55b, 55c, 55d, 90) to a footprint of the first vehicle.

3. The computer system of any of claims 1-2, wherein the processing circuitry is further configured to:
- determine the reference point for the steering maneuver at a location within the footprint of a second vehicle (55b).

4. The computer system of claim 1, wherein the processing circuitry is further configured to:
- determine the reference point for the steering maneuver at a location within the footprint of the first vehicle (55a).

5. The computer system of claim 4, wherein the processing circuitry is further configured to:
- determine the reference point (55d) on a forward section (96) of the first vehicle.

6. The computer system of claim 4, wherein the processing circuitry is further configured to:
- determine the reference point (55c) on an aft section (95) of the first vehicle.

7. The computer system of any of claims 1-6, wherein the processing circuitry is further configured to:
- receive the first data from at least one of a user interface (15), a sensor (30), a communications network (25), or any combination thereof.

8. The computer system of any of claims 1-6, wherein the processing circuitry is further configured to:
- receive the first data from a user interface (15);
- receive, from a sensor (30) of the first vehicle, second data (16) indicative of an object in the vicinity (90) of the first vehicle; and
- determine the reference point for the steering maneuver of the first vehicle based on the first data and the second data.

9. The computer system of any of claims 1-8, wherein the axis of rotation is orthogonal to a plane of the reference point, and the plane of the reference point is parallel to a medium upon which the first vehicle is situated for travel.

10. The computer system of any of claims 1-9, wherein the axis of rotation is relative to the first vehicle.

11. The computer system of claim 10, wherein the reference point comprises a fixed point (55c) on an area of land or structure abutting the area of land (92).

12. The computer system of any of claims 1-11, wherein the steering controller is configured to:
- receive the control message from the processing circuitry;
- receive an input (62) from the user interface to initiate the steering maneuver; and
- control the first vehicle in the steering maneuver about the axis of rotation.

13. The computer system of any of claims 1-12, wherein the first vehicle and/or the second vehicle comprises at least one of a vessel, an automobile, or an aerial vehicle.

14. The computer system of any of claims 8-12, wherein the medium upon which the first vehicle is situated for travel comprises at least one of water, a paved surface, air, or space, or any combination thereof.

15. A vehicle comprising the computer system of any of claims 1-14.
